# EUROPÄISCHE PATENTSCHRIFT

(11) **EP 1 127 224 B1**
(45) Veröffentlichungstag und Bekanntmachung des Hinweises auf die Patenterteilung: **07.05.2003**
(21) Anmeldenummer: 99959196.9
(22) Anmeldetag: 05.10.1999
(51) Int. Cl.: F16C 11/06

(54) **KUGELGELENK**
BALL JOINT
JOINT A ROTULE

(30) Priorität: 02.11.1998 DE 29819487 U
(43) Veröffentlichungstag der Anmeldung: 29.08.2001
(73) Patentinhaber: Sachsenring Automobiltechnik AG, 08058 Zwickau (DE)
(72) Erfinder: RABE, Jürgen, D-91315 Höchstadt (DE)
(74) Vertreter: Hufnagel, Walter, Dipl.-Ing., Dipl.-Wirtsch.-Ing.
(86) Internationale Anmeldenummer: DE9903242
(87) Internationale Veröffentlichungsnummer: WO00026549

(56) Entgegenhaltungen:
- DE-A- 4 412 597
- DE-U- 29 721 050
- DE-U- 29 722 507
- GB-A- 1 121 004
- US-A- 5 601 378
- US-A- 5 641 235

## Beschreibung

Die vorliegende Erfindung bezieht sich auf ein Kugelgelenk gemäß dem Oberbegriff des Anspruchs 1 und des Anspruchs 2.

Ein derartiges Kugelgelenk ist aus dem Dokument US 5641235 A bekannt. Bei diesem bekannten Kugelgelenk wird auf die Kugel eine mehrfach längsgeschlitzte Lagerschale aufgeschnappt. Im Bereich des Äquators besitzt die Lagerschale eine umlaufende Reihe von Erhöhungen. Diese sind so angeordnet und ausgeführt, daß sie eine radiale Zentrierung der Lagerschale samt Kugel innerhalb des Ringteils eines Gehäuseteils bewirken können. Nach Einsetzen der Kugel wird ein Gehäusematerial eingespritzt, das den Zwischenraum zwischen Lagerschale und Innenwand des Ringteils ausfüllt. Beim Formvorgang des Gehäusematerials fließt dieses durch die Täler zwischen den Erhöhungen hindurch. Auf der zum Kugelzapfen hin offen Seite der Lagerschale bildet das Gehäusematerial einen Ringwulst mit einer Außennut zum Einsetzen einer Dichtungsmanschette.

Bei dieser bekannten Konstruktion wird lediglich eine radiale Zentrierung der Lagerschale samt Kugel innerhalb des Ringteils vorgenommen.

Mit der vorliegenden Erfindung soll die Aufgabe gelöst werden, ein Kugelgelenk der genannten Art so weiterzubilden, daß eine bessere Positionierung der Lagerschale samt Kugel im Ringteil erreicht wird und die Herstellung des Kugelgelenks unkomplizierter durchgeführt werden kann.

Nach dem Anspruchs 1 ist am Lagerschalenrand ein seitlich abstehender Bund vorgesehen, der auf dem Ringteil aufliegt und der Aussparungen besitzt, durch welche das Gehäusematerial hindurchfließen kann, wobei auch der aufliegende Bund vom Ringwulst eingeformt wird. Durch diese Maßnahmen kann beim Eindrücken der Kugel mit der Lagerschale in die Aussparung des Ringteils so weit, daß der Bund auf der Oberseite des Ringteils aufliegt, eine automatische Ausrichtung der Lagerschale innerhalb des Ringteils erfolgen. Weiterhin wird durch den aufliegenden Bund die Einsetztiefe der Lagerschale mit Kugel in einfacher Weise begrenzt.

Gemäß den Merkmalen des Anspruchs 2 wird diese Aufgabe dadurch gelöst, daß eine Verschwenkung der Lagerschale aus ihrer Sollage dadurch vermieden wird, daß ebenfalls am Lagerschalenrand ein nach außen abstehender Bund, jedoch mit gleichem oder zum Teil auch größerem Durchmesser als der Innendurchmesser der Innenwand des Ringteils vorgesehen und der Bund oder ein Teil desselben in den Ringteil eingepreßt wird. Durch diesen Bund wird in Verbindung mit den zusätzlich an der Lagerschale vorgesehenen Zentriermitteln, die an der Innenwand zweckmäßig unter Vorspannung anliegen, erreicht, daß die Lagerschale praktisch nicht mehr aus ihrer Sollage verschwenkt werden kann. Hierdurch kann die eingesetzte Kugel mit Kugelzapfen in der Regel ohne besondere Vorkehrungen weiterverarbeitet werden. Zusätzlich kann ein aufliegender Bund gemäß den Merkmalen des Anspruchs 1 vorgesehen sein.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: ein Kugelgelenk von der Seite gesehen im Schnitt,
- Fig. 2: eine Lagerschale von der Seite gesehen im Schnitt,
- Fig. 3: die Lagerschale der Fig. 2 in einer Draufsicht,
- Fig. 4: die Lagerschale der Fig. 2 und 3 in einer perspektivischen Ansicht seitlich von unten,
- Fig. 5: eine Lagerschale, deren Bund in die Öffnung des Ringteils eingepreßt ist, wobei ein Teil des Bundes auf dem Ringteil aufliegt, von der Seite im Schnitt gesehen
- Fig. 6: die gleiche Ansicht, wie Fig. 5, jedoch mit einer Lagerschale ohne aufliegenden Bund, in eingepreßtem Zustand und
- Fig. 7: einen vergrößerten Ausschnitt eines Randes einer Lagerschale mit besonderer Ausgestaltung des Randes eines angeformten abstehenden Bundes und einem angefasten Rand der Innenwand eines Ringteils des Kugelgelenkgehäuses.

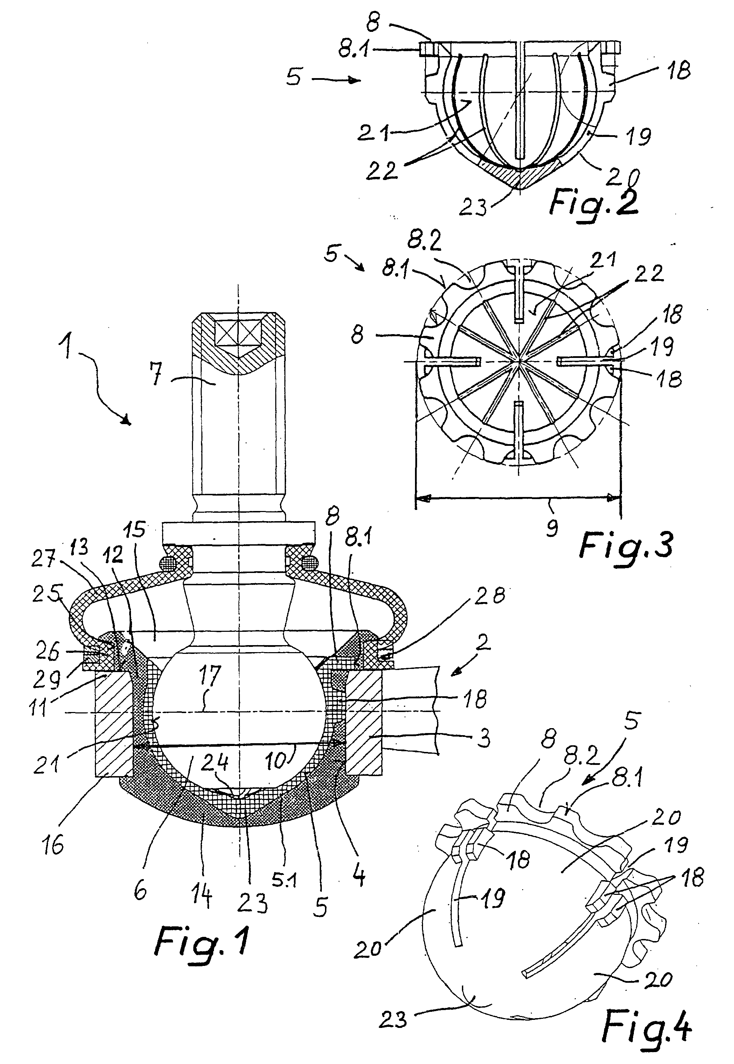

In der Fig. 1 ist mit 1 ein Kugelgelenk bezeichnet. Dieses Kugelgelenk 1 besitzt ein Kugelgelenkgehäuse 2 mit einem Ringteil 3. Im Ringteil 3 ist im Abstand zu seiner Innenseite 4 eine mit einer aufgeschnappten Lagerschale 5 versehene Kugel 6 mit einem in der Zeichnung nach oben dargestellt abstehenden Kugelzapfen 7 angeordnet.

Die Lagerschale 5 besitzt oben einen seitlich abstehenden Bund 8. Dessen Außendurchmesser 9 (Fig. 3) ist größer als der Innendurchmesser 10 (Fig. 1) der oberen, in der dem Kugelzapfen 7 zugewandten Seite 11 des Ringteils 3 vorgesehenen Öffnung 12. Der Bund 8 liegt auf der Oberseite 13 des Ringteils 3 auf. Der Bund 8 besitzt an seinem Rand 8.1 Aussparungen 8.2. Beim Ausführungsbeispiel sind diese als nach innen ragende Kreissegmente ausgebildet. Die Aussparungen 8.2 dienen dazu, den Durchfluß von Gehäusematerial 14 zu ermöglichen, das in den Zwischenraum zwischen Kugel 6 bzw. Lagerschale 5 und der Innenseite 4 des Ringteils 3 eingespritzt oder eingegossen wird. Vorzugsweise besteht dieses Gehäusematerial 14 aus einem geeigneten Polymer, insbesondere einem Thermoplast oder Duroplast.

Das Gehäusematerial 14 bildet auf der dem Kugelzapfen 7 zugewandten Oberseite 13 des Ringteils 3 einen auf die Oberfläche ragenden, also den Ringteil 3 umgreifenden Ringwulst 15, in den der Bund 8 eingeformt ist. Das Gehäusematerial 14 umgreift den Ringteil 3 auch auf der dem Kugelzapfen 7 abgewandten Seite 16 des Ringteils 3 und umgibt dort die Lagerschale 5.

Die Lagerschale 5 besitzt an ihrer Außenseite zumindest im Bereich des Äquators 17 - am Umfang verteilt - seitlich abstehende Zentrierstützen 18. Diese stützen sich, gegebenenfalls unter Vorspannung, an der Innenseite 4 des Ringteils 3 ab.

Um die Lagerschale 5 leicht auf die Kugel 6 aufschnappen zu können, ist diese mit Schlitzen 19 versehen. Diese erstrecken sich vom Bund 8 aus zum Äquator 17 hin und vorzugsweise bis über diesen hinaus. Hierdurch werden Lagerschalenflügel 20 gebildet, die beim Einsetzen der Kugel 6 relativ leicht nach außen auslenkbar sind und auf die Kugel 6 aufschnappen. Bevorzugt sind die Zentrierstützen 18 seitlich, insbesondere beidseitig, an den Schlitzen 19 angeordnet. Diese Zentrierstützen 18 können zusätzlich zu weiteren an der Lageschale 5 vorgesehenen Zentrierstützen vorgesehen sein.

Gegebenenfalls kann es zweckmäßig sein, auf der Innenseite 21 der Lagerschale 5 Schmiernuten 22 anzubringen. Diese erstrecken sich vorteilhaft in oder etwa in Richtung der Schlitze 19.

Auf der dem Kugelzapfen 7 abgewandten Seite 5.1 der Lagerschale 5 ist vorteilhaft eine nach außen abstehende Erhöhung 23 angeformt. Diese dient zum besseren Verteilen des von der Seite 16 aus eingespritzten oder eingepreßten Gehäusematerials 14. Auf der der Erhöhung 23 gegenüberliegenden Seite ist bevorzugt eine Vertiefung 24 zum Einlagern von Schmiermittel angebracht bzw. angeformt, wobei sich die Schmiernuten 22 bis in diese Vertiefung 24 erstrecken.

Der Ringwulst 15 besitzt eine umlaufende Nut 25. In diese greift ein Dichtwulst 26 einer Abdichtmanschette 27 ein. Der Dichtwulst 26 ist seinerseits mit einer umlaufenden Kehle 28, einer Nut oder dgl. versehen, in die ein Spannring 29 eingesetzt ist.

Die Montage des Kugelgelenks 1 erfolgt derart, daß zunächst die Lagerschale 5 auf die Kugel 6 aufgeschnappt wird. Anschließend wird die Kugel 6 mit der Lagerschale 5 in die Aussparung des Ringteils 3 so weit eingedrückt, bis der Bund 8 an der Oberseite 13 des Ringteils 3 anliegt.

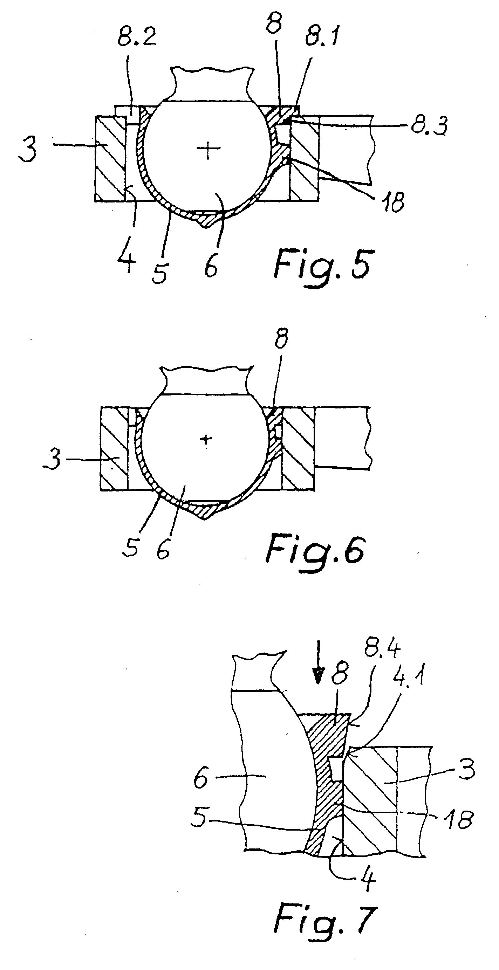

Bei anderen möglichen, in den Fig. 5 bis 7 dargestellten Ausführungsformen der Erfindung kann der Bund 8 derart ausgeführt sein, daß der Bund 8 teilweise oder ganz in die Öffnung 12 hineinragt. Bei der Ausführung gemäß Fig. 5 mit nur teilweisem Einsatz in die Öffnung 12 liegt ein verbleibender Randteil 8.1 des Bundes 8 auf der Oberseite 13 auf. Vorteilhaft ist der in die Öffnung 12 hineinragende Teil 8.3 des Bundes 8 oder im zweiten Fall gemäß Fig. 6 der gesamte Bund 8 in der Öffnung 12 fixiert. Zweckmäßig erfolgt die Fixierung durch Einpressen des in die Öffnung 12 hineinragenden Teils 8.3 des Bundes 8 bzw. des gesamten Bundes 8. Der Außendurchmesser des genannten Teils 8.3 des Bundes 8 bzw. des gesamten Bundes 8 ist mindestens so groß wie der Innendurchmesser des Ringteils 3. Ist der Außendurchmesser größer, so wird der in die Öffnung 12 hineinragende Teil 8.3 des Bundes 8 bzw. der gesamte Bund 8 beim Einpressen elastisch oder plastisch verformt. Die Außenwand 8.4 des in die Öffnung 12 hineinragenden Bundes 8 bzw. des Teils 8.3 des Bundes 8 kann in diesem Fall zur Öffnung 12 hin leicht konisch sich verjüngend ausgebildet sein.

Zum leichteren Einsetzen der Lagerschale 5 kann der obere Rand 4.1 der Innenseite 4 des Ringteils 3 nach außen erweitert sein, wie die Fig. 1 und 7 zeigen.

Beim Einsetzen der Lagerschale 5 zentrieren und fixieren die Zentrierstützen 18 und gegebenenfalls auch der in die Öffnung 12 hineinragende Teil 8.3 des Bundes 8 oder der gesamte Bund 8 die Lagerschale 5 und damit die Kugel 6 im Ringteil 3. Danach wird die so gebildete Einheit in ein Formwerkzeug eingesetzt und in der Zeichnung von unten her Gehäusematerial 14 eingespritzt oder eingepreßt. Nach der Entnahme aus dem Formwerkzeug wird die Abdichtmanschette 27 in bekannter Weise aufgebracht.

## Patentansprüche

1. Kugelgelenk (1) mit einem einen Ringteil (3) aufweisenden Kugelgelenkgehäuse (2) und einer die Kugel (6) umfassenden Lagerschale (5), die am Umfang eine Anzahl seitlich abstehender Zentriermittel (18) aufweist, welche sich an der Innenseite (4) des Ringteils (3) abstützen und die Lagerschale (5) im Ringteil (3) im Abstand von der Innenseite (4) des Ringteils (3) radial zentrieren und der zwischen der Innenseite (4) und der Lagerschale (5) befindliche Raum mit eingespritzem oder eingegossenem Gehäusematerial (14), insbesondere Kunststoff, ausgefüllt ist, wobei das Gehäusematerial (14) beim Formvorgang zwischen benachbarten Zentriermitteln (18) hindurchfließen kann und auf der zum Kugelzapfen (7) hin offenen Seite der Lagerschale (5) einen den Ringteil (3) übergreifenden Ringwulst (15) bildet, **dadurch gekennzeichnet, daß** die Lagerschale (5) an der zum Kugelzapfen (7) hin offenen Seite (11) einen seitlich abstehenden Bund (8) aufweist, dessen Außendurchmesser (9) größer ist als der Innendurchmesser (10) der zugehörigen Öffnung (12) des Ringteils (3), daß der Bund (8) auf der Seite (11) des Kugelzapfens (7) auf dem Ringteil (3) aufliegt, daß der Bund(8) am Rand (8.1) verteilte Aussparungen (8.2) besitzt, die derart angeordnet und ausgebildet sind, daß das Gehäusematerial (14) beim Formvorgang durch diese hindurchfließen kann, und daß der seitlich abstehende Bund (8) in den durch das Gehäusematerial (14) gebildeten Ringwulst (15) eingeformt ist.

2. Kugelgelenk (1) mit einem einen Ringteil (3) aufweisenden Kugelgelenkgehäuse (2) und einer die Kugel (6) umfassenden Lagerschale (5), die am Umfang eine Anzahl nach außen abstehender Zentriermittel (18) aufweist, welche sich an der Innenseite (4) des Ringteils (3) abstützen und die Lagerschale (5) im Ringteil (3) im Abstand von der Innenseite (4) des Ringteils (3) radial zentrieren und der zwischen der Innenseite (4) und der Lagerschale (5) befindliche Raum mit eingespritzem oder eingegossenem Gehäusematerial (14), insbesondere Kunststoff, ausgefüllt ist, wobei das Gehäusematerial (14) beim Formvorgang zwischen benachbarten Zentriermitteln (18) hindurchfließen kann und auf der zum Kugelzapfen (7) hin offenen Seite (11) der Lagerschale (5) einen den Ringteil übergreifenden Ringwulst (15) bildet, insbesondere nach Anspruch 1, **dadurch gekennzeichnet, daß** die Lagerschale (5) zusätzlich zu den Zentriermitteln (18) an der zum Kugelzapfen (7) hin offenen Seite (11) einen seitlich abstehenden Bund (8) aufweist, welcher zumindest zum Teil in die Öffnung (12) des Ringteils (3) hineinragt, wobei der Außendurchmesser (9) des in die Öffnung (12) hinein ragenden Teils (8; 8.3) gleich oder größer ist als der Innendurchmesser (10) der zugehörigen Öffnung (12) des Ringteils (3) und der Bund (8) bzw. ein in die Öffnung (12) hineinragender Teil (8.3) in der Öffnung (12), insbesondere bei größerem Außendurchmesser des hineinragenden Teils durch einen Preßsitz, fixiert ist und daß der Bund (8) und der hineinragende Teil (8; 8.3) am Rand (8.1) verteilte Aussparungen (8.2) besitzt, die derart angeordnet und ausgebildet sind, daß beim Formvorgang das Gehäusematerial (14) durch diese hindurchfließen kann.

3. Kugelgelenk nach Anspruch 1 oder 2, **dadurch gekennzeichnet, daß** die Aussparungen (8.2) die Form eines Kreissegments besitzen.

4. Kugelgelenk nach einem der Ansprüche 1 bis 3, **dadurch gekennzeichnet, daß** das Gehäusematerial (14) auf der dem Kugelzapfen (7) abgewandten Seite (16) die Lagerschale (5) umgibt und den Ringteil (3) umgreift.

5. Kugelgelenk nach einem der Ansprüche 1 bis 4, **dadurch gekennzeichnet, daß** die Zentriermittel (18) unter Vorspannung an der Innenseite (4) des Ringteils (3) anliegen.

6. Kugelgelenk nach einem der Ansprüche 1 bis 5, **dadurch gekennzeichnet, daß** die Lagerschale (5) am Umfang verteilte, sich vom Bund (8) aus zum Äquator (17) hin über diesen hinaus erstreckende Schlitze (19) aufweist.

7. Kugelgelenk nach einem der Ansprüche 1 bis 6, **dadurch gekennzeichnet, daß** Zentriermittel (18) seitlich an den Schlitzen (19) vorgesehen sind.

8. Kugelgelenk nach einem der Ansprüche 1 bis 7, **dadurch gekennzeichnet, daß** die Lagerschale (5) auf der Innenseite (21) Schmiernuten (22) aufweist.

9. Kugelgelenk nach Anspruch 8, **dadurch gekennzeichnet, daß** die Schmiernuten (22) in oder im wesentlichen in Richtung der Schlitze (19) verlaufen.

10. Kugelgelenk nach einem der Ansprüche 1 bis 9, **dadurch gekennzeichnet, daß** die Lagerschale (5) auf der dem Kugelzapfen (7) abgewandten geschlossenen Seite (5.1) eine nach außen gerichtete Erhöhung (23) aufweist.

11. Kugelgelenk nach einem der Ansprüche 1 bis 10, **dadurch gekennzeichnet, daß** die Lagerschale (5) auf der der Erhöhung (23) gegenüberliegenden Seite der Lagerschale (5) eine Vertiefung (24) aufweist.

12. Kugelgelenk nach einem der Ansprüche 8 bis 11, **dadurch gekennzeichnet daß** die Schmiernuten (22) bis in die Vertiefung (24) reichen.

13. Kugelgelenk nach einem der Ansprüche 1 bis 12, **dadurch gekennzeichnet, daß** der Ringwulst (15) eine umlaufende Nut (25) aufweist.

14. Kugelgelenk nach Anspruch 13, **dadurch gekennzeichnet, daß** in die Nut (25) der Dichtwulst (26) einer Abdichtmanschette (27) eingreift.

15. Kugelgelenk nach Anspruch 14, **dadurch gekennzeichnet, daß** der Dichtwulst (26) eine umlaufende Kehle (28) oder Nut aufweist, in die ein Spannring (29) eingesetzt ist.

16. Kugelgelenk nach einem der Ansprüche 1 bis 15, **dadurch gekennzeichnet, daß** zusätzliche Zentriermittel (8.3) als in die Öffnung (12) des Ringteils (3) hineinragender zentrierender und fixierender und gegebenenfalls eingepreßter Teil (8.3) des seitlich abstehenden Bundes (8) ausgebildet sind und der verbleibende Teil (8.1) des Bundes (8) auf der Oberseite (13) des Ringteils (3) aufliegt.

17. Kugelgelenk nach einem der Ansprüche 1 bis 16, **dadurch gekennzeichnet, daß** die Außenwand (8.4) des in die Öffnung (12) hineinragenden Bundes (8) oder eines Teils (8.3) des Bundes (8) zur Öffnung (12) hin leicht konisch sich verjüngend ausgebildet ist.

18. Kugelgelenk nach einem der Ansprüche 1 bis 17, **dadurch gekennzeichnet, daß** der obere Rand (4.1) der Innenseite (4) des Ringteils (3) nach außen erweitert ist.

## Claims

1. Ball joint (1) with a ball joint housing (2) which exhibits an annular part (3), and with a bearing shell (5) which encloses the ball (6) and on the circumference exhibits a number of laterally protruding centring means (18) which are supported on the inside (4) of the annular part (3) and centre the bearing shell (5) radially in the annular part (3) a distance from the inside (4) of the annular part (3), the space between the inside (4) and the bearing shell (5) being filled with injected or cast housing material (14), in particular plastic, the housing material (14) being able to flow through between neighbouring centring means (18) during the moulding operation and forming an annular bead (15) engaging over the annular part (3) on the open side of the bearing shell (5) facing the ball pin (7), **characterised in that** on the open side (11) facing the ball pin (7) the bearing shell (5) exhibits a laterally protruding flange (8) the outside diameter (9) of which is greater than the inside diameter (10) of the associated opening (12) of the annular part (3), **in that** on the side (11) of the ball pin (7) the flange (8) lies on the annular part (3), **in that** the flange (8) has recesses (8.2) which are distributed around the edge (8.1) and are arranged and embodied such that the housing material (14) can flow through these during the moulding operation, and **in that** the laterally protruding flange (8) is moulded into the annular bead (15) formed by the housing material (14).

2. Ball joint (1) with a ball joint housing (2) which exhibits an annular part (3), and with a bearing shell (5) which encloses the ball (6) and on the circumference exhibits a number of outwardly protruding centring means (18) which are supported on the inside (4) of the annular part (3) and centre the bearing shell (5) radially in the annular part (3) a distance from the inside (4) of the annular part (3), the space between the inside (4) and the bearing shell (5) being filled with injected or cast housing material (14), in particular plastic, the housing material (14) being able to flow through between neighbouring centring means (18) during the moulding operation and forming an annular bead (15) engaging over the annular part on the open side (11) of the bearing shell (5) facing the ball pin (7), in particular as in claim 1, **characterised in that** in addition to the centring means (18) on the open side (11) facing the ball pin (7) the bearing shell (5) exhibits a laterally protruding flange (8) which projects at least partly into the opening (12) of the annular part (3), the outside diameter (9) of the part (8; 8.3) projecting into the opening (12) being equal to or greater than the inside diameter (10) of the associated opening (12) of the annular part (3), and the flange (8) or a part (8.3) projecting into the opening (12) being immobilised in the opening (12) by a press fit, in particular when the projecting part has a greater outside diameter, and **in that** the flange (8) and the projecting part (8; 8.3) has recesses (8.2) which are distributed around the edge (8.1) and are arranged and embodied such that the housing material (14) can flow through these during the moulding operation.

3. Ball joint according to claim 1 or 2, **characterised in that** the recesses (8.2) have the shape of a segment of a circle.

4. Ball joint according to one of claims 1 to 3, **characterised in that** the housing material (14) surrounds the bearing shell (5) on the side (16) remote from the ball pin (7) and engages around the annular part (3).

5. Ball joint according to one of claims 1 to 4, **characterised in that** the centring means (18) bear on the inside (4) of the annular part (3) under preload.

6. Ball joint according to one of claims 1 to 5, **characterised in that** the bearing shell (5) exhibits slots (19) distributed around the circumference and extending from the flange (8) to beyond the equator (17).

7. Ball joint according to one of claims 1 to 6, **characterised in that** centring means (18) are provided at the side of the slots (19).

8. Ball joint according to one of claims 1 to 7, **characterised in that** the bearing shell (5) exhibits lubricating grooves (22) on the inside (21).

9. Ball joint according to claim 8, **characterised in that** the lubricating grooves (22) run in or essentially in the direction of the slots (19).

10. Ball joint according to one of claims 1 to 9, **characterised in that** the bearing shell (5) exhibits an outwardly directed protrusion (23) on the closed side (5.1) remote from the ball pin (7).

11. Ball joint according to one of claims 1 to 10, **characterised in that** the bearing shell (5) exhibits a hollow (24) on the side of the bearing shell (5) facing the protrusion (23).

12. Ball joint according to one of claims 8 to 11, **characterised in that** the lubricating grooves (22) extend into the hollow (24).

13. Ball joint according to one of claims 1 to 12, **characterised in that** the annular bead (15) exhibits a circumferential groove (25).

14. Ball joint according to claim 13, **characterised in that** a sealing gaiter (27) engages in the groove (25) of the sealing bead (26).

15. Ball joint according to claim 14, **characterised in that** the sealing bead (26) exhibits a circumferential channel (28) or groove into which a clamping ring (29) is inserted.

16. Ball joint according to one of claims 1 to 15, **characterised in that** additional centring means (8.3) are provided in the form of the centring and immobilising and possibly press-fitted part (8.3) of the laterally protruding flange (8) projecting into the opening (12) of the annular part (3), and the remaining part (8.1) of the flange (8) lies on the upper side (13) of the annular part (3).

17. Ball joint according to one of claims 1 to 16, **characterised in that** the external wall (8.4) of the flange (8) projecting into the opening (12) or of a part (8.3) of the flange (8) is formed so that it tapers slightly conically towards the opening (12).

18. Ball joint according to one of claims 1 to 17, **characterised in that** the upper edge (4.1) of the inside (4) of the annular part (3) widens towards the outside.

## Revendications

1. Joint à rotule (1) comportant un boîtier (2) muni d'une pièce annulaire (3), et une coupelle de palier (5) entourant la rotule (6), cette coupelle ayant à sa périphérie un certain nombre de moyens de centrage (18) en saillie latéralement qui s'appuient contre le côté intérieur (4) de la pièce annulaire (3) et assurent le centrage radial de la coupelle de palier (5) dans la pièce annulaire (3) à une certaine distance du côté intérieur (4) de la pièce annulaire (3), dont l'espace entre le côté intérieur (4) et la coupelle de palier (5) est rempli de la matière (14) formant le boîtier, injectée ou coulée, notamment de la matière plastique,
la matière (14) du boîtier pouvant s'écouler lors de l'opération de moulage entre les moyens de centrage voisins (18), en formant du côté de la coupelle de palier (5), ouvert en direction du pivot de rotule (7), un bourrelet annulaire (15) qui chevauche la pièce annulaire (3),
**caractérisé en ce que**
la coupelle de palier (5) comporte une collerette (8) latéralement en saillie au niveau du côté ouvert (11) tourné vers le pivot de rotule (7), le diamètre extérieur (9) de cette collerette étant supérieur au diamètre intérieur (10) de l'ouverture (12) correspondante de la pièce annulaire (3),
la collerette (8) s'appuie sur le côté (11) du pivot de rotule (7) et contre la pièce annulaire (3),
au niveau de son bord (8.1), la collerette (8) comporte des évidements (8.2) répartis, disposés et réalisés de façon que la matière (14) constituant le boîtier puisse les traverser lors de l'opération de moulage et que la collerette (8) latéralement en saillie soit enrobée par le bourrelet annulaire (15) formé par la matière (14) du boîtier.

2. Joint à rotule (1) notamment selon la revendication 1,
comportant un boîtier (2) muni d'une pièce annulaire (3), et une coupelle de palier (5) entourant la rotule (6), cette coupelle ayant à sa périphérie un certain nombre de moyens de centrage (18) en saillie latéralement qui s'appuient contre le côté intérieur (4) de la pièce annulaire (3) et assurent le centrage radial de la coupelle de palier (5) dans la pièce annulaire (3) à une certaine distance du côté intérieur (4) de la pièce annulaire (3), dont l'espace entre le côté intérieur (4) et la coupelle de palier (5) est rempli de la matière (14) formant le boîtier, injectée ou coulée, notamment de la matière plastique,
la matière (14) du boîtier pouvant s'écouler lors de l'opération de moulage entre les moyens de centrage voisins (18), en formant du côté de la coupelle de palier (5), ouvert en direction du pivot de rotule (7), un bourrelet annulaire (15) qui chevauche la pièce annulaire (3),
**caractérisé en ce qu'**
en plus les moyens de centrage (18), la coupelle de palier (5) comporte sur le côté (11) ouvert en direction du pivot de rotule (7) une collerette (8) latéralement en saillie et qui pénètre au moins en partie dans l'ouverture (12) de la pièce annulaire (3),
le diamètre extérieur (9) de la partie (8 ; 8.3) pénétrant dans l'ouverture (12) étant égale ou supérieure au diamètre intérieur (10) de l'ouverture (12) correspondante de la pièce annulaire (3), et la collerette (8) ou une pièce (8.3) pénétrant dans l'ouverture (12) est fixée dans l'ouverture (12) notamment pour la partie de plus grand diamètre qui y pénètre, suivant un siège pressé, et
la collerette (8) et la partie (8 ; 8.3) qui pénètre comportent des évidements (8.2) répartis au niveau du bord (8.1), et disposés et réalisés de façon à permettre à la matière du boîtier (14) de les traverser au cours de l'opération de moulage.

3. Joint à rotule selon la revendication 1 ou 2,
**caractérisé en ce que**
les évidements (8.2) ont la forme d'un segment de cercle.

4. Joint à rotule selon les revendications 1 à 3,
**caractérisé en ce que**
la matière (14) du boîtier entoure la coupelle (5) sur le côté (16) à l'opposé de celui du pivot de rotule (7) et enserre la pièce annulaire (3).

5. Joint à rotule selon les revendications 1 à 4,
**caractérisé en ce que**
les moyens de centrage (18) sont appliqués sous précontrainte contre le côté intérieur (4) de la pièce annulaire (3).

6. Joint à rotule selon les revendications 1 à 5,
**caractérisé en ce que**
la coupelle de palier (5) comporte des fentes (19) réparties à la périphérie, s'étendant à partir de la collerette (8) vers l'équateur (17) en dépassant celui-ci.

7. Joint à rotule selon les revendications 1 à 6,
**caractérisé en ce que**
les fentes (19) sont munies latéralement de moyens de centrage (18).

8. Joint à rotule selon les revendications 1 à 7,
**caractérisé en ce que**
la coupelle (5) comporte des rainures de graissage (22) dans sa face intérieure (21).

9. Joint à rotule selon la revendication 8,
**caractérisé en ce que**
les rainures de graissage (22) sont dirigées dans la direction des fentes (19) ou essentiellement dans cette direction.

10. Joint à rotule selon les revendications 1 à 9,
**caractérisé en ce que**
la coupelle de palier (5) comporte sur son côté (5.1) fermé, à l'opposé du pivot de rotule (7), un bossage (23) tourné vers l'extérieur.

11. Joint à rotule selon les revendications 1 à 10,
**caractérisé en ce que**
la coupelle de palier (5) comporte une cavité (24) du côté opposé au bossage (23).

12. Joint à rotule selon les revendications 8 à 11,
**caractérisé en ce que**
les rainures de graissage (22) arrivent jusque dans la cavité (24).

13. Joint à rotule selon les revendications 1 à 12,
**caractérisé en ce que**
le bourrelet annulaire (15) comporte une rainure périphérique (25).

14. Joint à rotule selon la revendication 13,
**caractérisé en ce qu'**
un bourrelet d'étanchéité (26) d'un manchon d'étanchéité (27) pénètre dans la rainure (25).

15. Joint à rotule selon la revendication 14,
**caractérisé en ce que**
le bourrelet d'étanchéité (26) comporte une gorge périphérique (28) ou une rainure recevant un anneau de serrage (29).

16. Joint à rotule selon les revendications 1 à 15,
**caractérisé en ce que**
des moyens de centrage supplémentaires (8.3) sont réalisés sous la forme d'une partie (8.3) de la collerette (8) latéralement en saillie, qui se fixe en pénétrant de manière centrée dans l'ouverture (12) de la pièce annulaire (3) et le cas échéant y est pressée, et la partie restante (8.1) de la collerette (8) s'appuie contre le côté supérieur (13) de la pièce annulaire (3).

17. Joint à rotule selon les revendications 1 à 16,
**caractérisé en ce que**
la paroi extérieure (8.4) de la collerette (8) pénétrant dans l'ouverture (12) ou une partie (8.3) de la collerette (8) est réalisée de façon à diminuer sous une forme légèrement conique en direction de l'ouverture (12).

18. Joint à rotule selon les revendications 1 à 17,
**caractérisé en ce que**
le bord supérieur (4.1) du côté intérieur (4) de la pièce annulaire (3) va en s'élargissant vers l'extérieur.
